(19) **Europäisches Patentamt / European Patent Office / Office européen des brevets**

(11) **EP 2 115 542 B1**

(12) **FASCICULE DE BREVET EUROPEEN**

(45) Date de publication et mention
de la délivrance du brevet:
**07.03.2012 Bulletin 2012/10**

(21) Numéro de dépôt: **08701237.3**

(22) Date de dépôt: **04.01.2008**

(51) Int Cl.:
***G05D 1/06*** $^{(2006.01)}$

(86) Numéro de dépôt international:
**PCT/EP2008/050055**

(87) Numéro de publication internationale:
**WO 2008/081038 (10.07.2008 Gazette 2008/28)**

(54) **PROCEDE DE GUIDAGE AUTONOME D'UN AERONEF, ET AERONEF CORRESPONDANT**

VERFAHREN ZUR AUTONOMEN LENKUNG EINES FLUGZEUGS UND ENTSPRECHENDES FLUGZEUG

METHOD FOR THE AUTONOMOUS GUIDANCE OF AN AIRCRAFT AND CORRESPONDING AIRCRAFT

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **04.01.2007 FR 0752528**

(43) Date de publication de la demande:
**11.11.2009 Bulletin 2009/46**

(73) Titulaire: **SAGEM DEFENSE SECURITE**
**75015 Paris (FR)**

(72) Inventeur: **LACOURIE, Jacques**
**F-75015 Paris (FR)**

(74) Mandataire: **Callon de Lamarck, Jean-Robert et al**
**Cabinet Regimbeau**
**20 rue de Chazelles**
**75847 Paris cedex 17 (FR)**

(56) Documents cités:
**EP-A- 0 732 676    GB-A- 1 605 386**

- **BANAVAR SRIDHAR ET AL: "ANALYSIS OF IMAGE-BASED NAVIGATION SYSTEM FOR ROTOCRAFT LOW-ALTITUDE FLIGHT" IEEE TRANSACTIONS ON SYSTEMS, MAN AND CYBERNETICS, IEEE INC. NEW YORK, US, vol. 22, no. 2, 1 mars 1992 (1992-03-01), pages 290-299, XP000291552 ISSN: 0018-9472**

Printed by Jouve, 75001 PARIS (FR)

**Description**

DOMAINE TECHNIQUE GENERAL

La présente invention concerne un procédé de guidage d'un aéronef dans un environnement l'aéronef comportant au moins un capteur ayant un champ optique d'observation de l'environnement, l'environnement étant en défilement dans le champ du capteur, lors du déplacement de l'aéronef, par rapport à un point fixe au centre du champ.
L'invention concerne également un aéronef mettant en oeuvre le procédé.

ETAT DE L'ART

On connaît de nombreuses techniques de guidage autonome d'un aéronef dans un environnement.
Certaines techniques de l'état de l'art ont pour objectif le guidage d'un aéronef, comme par exemple un drone, se déplaçant à basse altitude dans un environnement comportant des obstacles, l'aéronef étant capable d'éviter les obstacles de façon autonome.
Les techniques précitées utilisent en général un capteur actif - comme par exemple un laser, un radar ou un sonar - ou un capteur du type GPS (« Global Positioning System » en anglais, à savoir « système de positionnement mondial »).
Elles présentent cependant des inconvénients.
Les techniques utilisant des capteurs actifs sont complexes, nécessitent en général une connaissance a priori de l'environnement, et sont onéreuses.
Les techniques utilisant des capteurs du type GPS nécessitent une cartographie de l'environnement, cartographie qui est à préparer ayant la mission de guidage de l'aéronef. Elles nécessitent ainsi également une connaissance *a priori* de l'environnement. Les capteurs du type GPS sont de plus lourds à embarquer dans un aéronef.
GB-A-1 605 386 divulgue un procédé selon le préambule de la revendication 1.

PRESENTATION DE L'INVENTION

L'invention propose de pallier au moins un de ces inconvénients.
A cet effet, on propose selon l'invention un procédé de guidage d'un aéronef selon la revendication 1.
L'invention est avantageusement complétée par les caractéristiques des revendications 2 à 11, prises seules ou en une quelconque de leur combinaison techniquement possible.
L'invention concerne également un aéronef mettant en oeuvre le procédé précité.
L'invention présente de nombreux avantages.
Elle permet d'utiliser un capteur dit « passif », à savoir un capteur optique du type caméra vidéo.
Elle permet ainsi un procédé plus simple et moins onéreux de guidage.
L'invention ne nécessite pas une connaissance *a priori* de l'environnement. L'invention ne nécessite pas non plus de cartographie de l'environnement.
L'invention permet de donner aux aéronefs volant en basse altitude, et dans le voisinage d'obstacles, une capacité à se guider de manière autonome. Cette capacité est obtenue en utilisant les observations d'au moins un capteur à imagerie à bord de l'aéronef, le capteur étant situé dans l'axe de progression de l'aéronef.
L'invention exploite en particulier un écart de défilement observé, par exemple à droite et à gauche du centre du champ du capteur. Cette information est utilisée pour déterminer au plus tôt le sens de la manoeuvre de guidage à effectuer. Elle exploite ainsi les informations de défilements naissants dans l'image pour détecter au plus tôt les obstacles, estimer leur proximité (temps, distance) et élaborer en amont les manoeuvres d'évitement.
L'ordre de guidage est calculé directement à partir des défilements mesurés. Il n'est pas besoin de reconstruire un environnement 3D, ce qui signifie que le procédé est mis en oeuvre de façon robuste et en temps réel sur l'aéronef.
L'objectif de l'invention n'est pas de réagir aux situations d'urgences. L'invention ne s'applique que sur un champ étroit autour de l'axe central de progression de l'aéronef. La résolution actuelle des capteurs optiques permet, avec une certaine robustesse, la détection d'objets et leur défilement à proximité de l'axe central.
Plus l'observation est proche du centre, meilleure est la qualité du guidage, car il y a alors :

- précocité de la détection,
- cohérence géographique de l'information, fournissant une bonne estimation de la présentation de l'obstacle.

L'invention peut être complétée par un autre procédé de guidage, pour une capacité de surveillance des obstacles à deux niveaux, à savoir le guidage à long terme (ou « Long Term Guidance ») et le guidage à court terme (ou « Short Term Guidance »). A cet effet, on a une :

- surveillance en champ étroit (objet de l'invention) pour détecter les obstacles au plus tôt et effectuer un guidage à long terme,
- surveillance en champ large pour compléter l'observation des obstacles à proximité : un capteur différent, du type radio sonde, peut rendre compte de la présence d'obstacles se présentant aux forts dépointages pour un guidage à court terme.

## PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 représente schématiquement une vue de profil d'un aéronef dans un environnement ;
- la figure 2 représente schématiquement un champ d'un capteur d'un aéronef ;
- les figures 3 et 4 représentent schématiquement une vue du haut d'un aéronef dans un environnement ;
- les figures 5A et 5B représentent schématiquement un champ du capteur avec des points défilants dans des bandes de détection, la figure 5A illustrant le guidage latéral, et la figure 5B le guidage selon deux axes ;
- la figure 6 représente schématiquement une vue du haut d'une manoeuvre d'évitement d'un obstacle ;
- la figure 7 représente schématiquement des moyens de mise en oeuvre d'un procédé selon l'invention ;
- les figures 8 et 9 représentent schématiquement des champs d'un capteur ;
- la figure 10 représente schématiquement une vue de profil d'un aéronef comportant un capteur monté à pivotement, le pivotement peut être requis pour aligner le capteur avec le vecteur vitesse en vol en palier ou lors d'une manoeuvre d'atterrissage ; et
- la figure 11 représente schématiquement un aéronef comportant deux capteurs.

Dans l'ensemble des figures, les éléments similaires portent des références numériques identiques.

## DESCRIPTION DETAILLEE

On précise ici que dans la présente description, l'invention utilise l'hypothèse que l'environnement est statique ou que des éléments faisant partie de l'environnement se déplacent très lentement par rapport au déplacement de l'aéronef dans l'environnement.

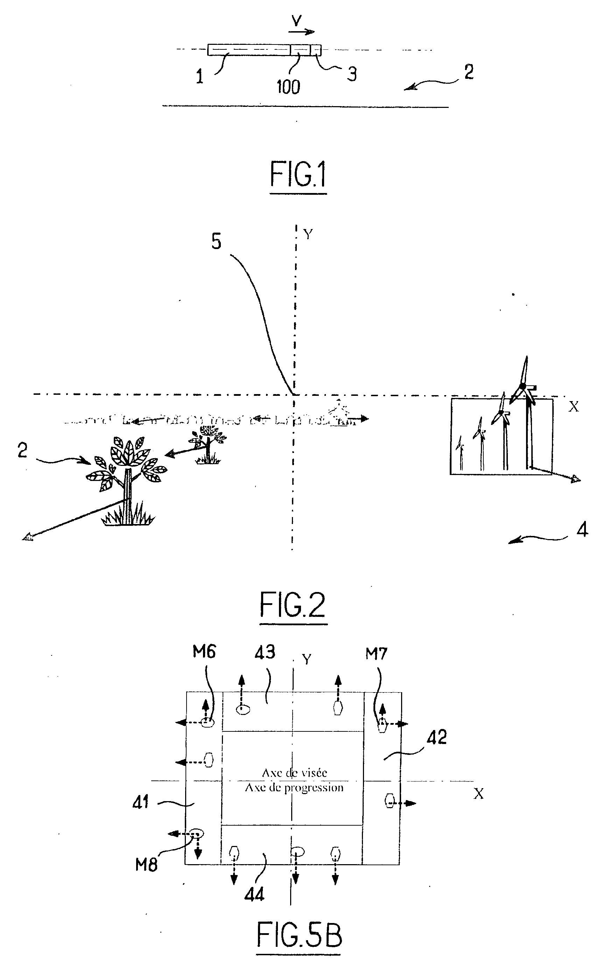

Comme le montrent les figures 1 et 2, l'invention concerne un procédé de guidage d'un aéronef 1 dans un environnement 2. L'aéronef 1 comporte au moins un capteur 3 ayant un champ optique 4 d'observation de l'environnement.

La description s'applique principalement à des informations sur un seul axe, l'axe horizontal X dans le champ 4. Le principe s'applique cependant sur les deux axes : l'axe horizontal X et l'axe vertical Y.

L'environnement 2 est en défilement dans le champ 4 du capteur 3, lors du déplacement de l'aéronef 1, par rapport à un point fixe 5 au centre du champ 4.

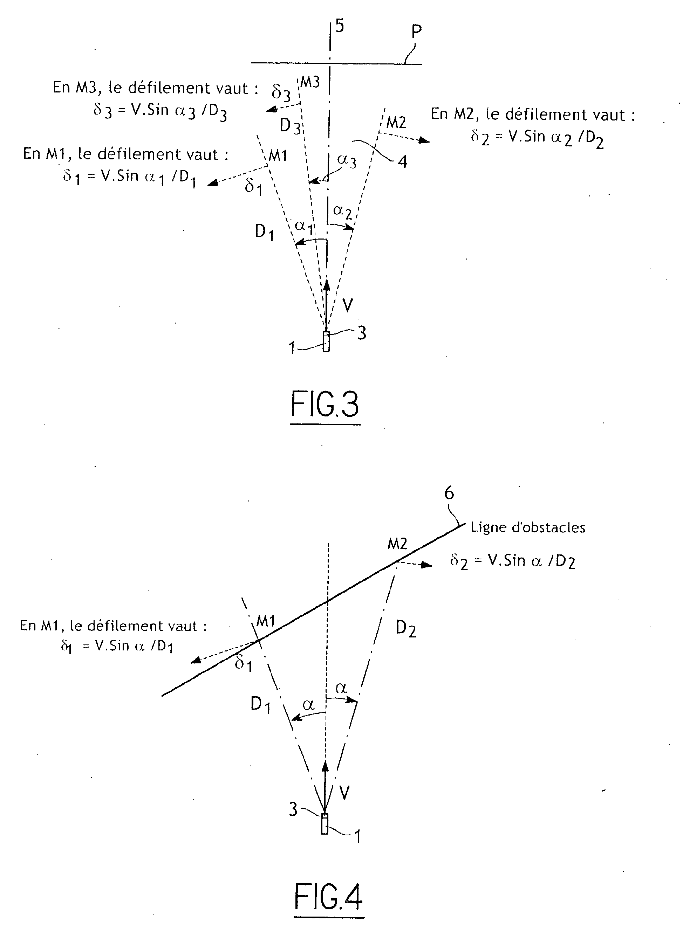

Comme le montre la figure 3, dans le champ 4 du capteur 3 à bord de l'aéronef 1 se déplaçant à la vitesse V, et autour du centre de l'image correspondant au point fixe 5, des motifs M1, M2 et M3 observés ont un défilement latéral $\delta i$, (i=1 à 3) dans un plan P perpendiculaire à V, qui est fonction du dépointage $\alpha i$ (i=1 à 3), et de leur distance à l'aéronef Di (i=1 à 3) :

$$\delta i = \frac{V}{Di} \cdot \sin \alpha i \ \text{ avec i=1 à 3.}$$

On précise ici qu'on appelle « motif » toute forme issue d'un traitement d'images, comme par exemple un point, un segment, ou tout autre objet.

On détermine ainsi au moins deux grandeurs $\delta_1$ et $\delta_2$ liées au défilement de l'environnement. La grandeur $\delta_1$ est située d'un côté du point fixe 5, et l'autre grandeur $\delta_2$ est située de l'autre côté du point fixe 5.

On détermine ensuite un écart $\Delta$ entre les deux grandeurs et on guide automatiquement l'aéronef dans l'environnement, un sens du guidage étant fonction dudit écart.

Dans l'exemple de la figure 4, les deux grandeurs déterminées sont les défilements $\delta_1$ et $\delta_2$ sur un axe horizontal X dans le champ 4. Le sens du guidage automatique selon une direction parallèle à l'axe horizontal X est fonction de l'écart - ou différence - $\Delta = \delta_1 - \delta_2$ entre les deux défilements sur l'axe X.

Pour éviter un obstacle matérialisé par un motif Mi, le guidage automatique de l'aéronef selon ladite direction est effectué selon un sens tendant à annuler l'écart $\Delta$. En d'autres termes, l'écart entre les deux défilements donne un défilement résultant, et le guidage automatique selon l'axe horizontal est effectué dans le sens opposé au défilement résultant observé.

L'utilisation de l'invention est optimale avec les défilements significatifs détectés au plus tôt, c'est à dire au voisinage du centre 5 du champ 4 du capteur.

Comme le montre la figure 4, dans le cas d'un aéronef 1 survolant un relief à basse altitude, on peut émettre l'hypothèse que les obstacles sont distribués de manière assez continue sur une ligne 6 de relief.

Le défilement sera donc une fonction continue évoluant assez lentement. Un filtrage peut prendre en compte ce comportement. De plus, un calcul effectué sur un nombre restreint de motifs (correspondant à M1 et M2 par exemple) défilants peut permettre d'estimer la proximité de la ligne 6 de relief.

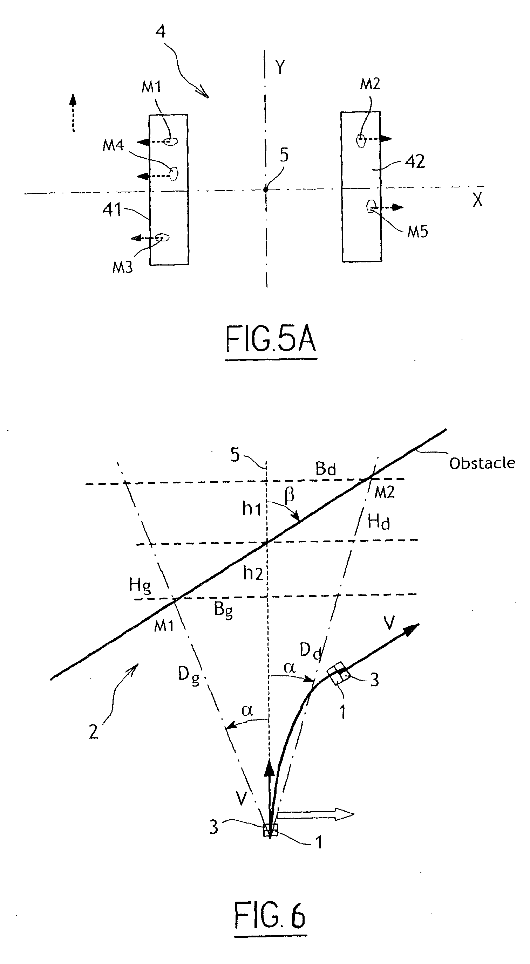

Comme le montrent les figures 5, l'exploitation des grandeurs est optimale sur typiquement deux bandes 41 et 42 ou 43 et 44.Comme le montre la figure 5A, la détermination des grandeurs peut être effectuée sur deux bandes 41 et 42 du champ 4, de part et d'autre et proches du point fixe 5 du champ 4. On prend typiquement 100 ou 150 mrd entre les bandes 41 et 42. C'est dans les bandes 41 et 42 que seront détectés les motifs défilants correspondants àM1 à M5 par exemple.

Bien entendu, les bandes 41 et 42 peuvent être plus au moins étendues selon l'axe X et selon l'axe Y. Les bandes 41 et 42 sont relativement proches du point fixe 5 pour obtenir une bonne anticipation des manoeuvres de guidage à effectuer, mais relativement éloignées pour permettre une détection suffisante des défilements des points.

On rappelle que, comme le montre la figure 2, l'axe vertical Y peut également être pris en compte.

Dans ce cas, la détermination des grandeurs peut être également effectuée sur deux bandes 43 et 44 du champ 4, de part et d'autre et proches du point fixe 5 du champ 4 (typiquement 100 ou 150 mrd entre les bandes 43 et 44), mais sur l'axe vertical Y. C'est également dans les bandes 43 et 44 que seront détectés les motifs défilants. Comme précédemment pour les bandes 41 et 42, les bandes 43 ou 44 peuvent être plus au moins étendues selon l'axe X et selon l'axe Y.

Bien entendu, les motifs correspondants à M6, M7 et M8 et situés à la fois dans les bandes 43 ou 44 et 41 ou 42 permettent d'avoir des informations selon les deux axes X et Y.

Le tableau 1 suivant donne les relations entre la vitesse de l'aéronef, la distance à l'objet, le temps restant pour la manoeuvre de guidage, le dépointage de l'observation, le défilement géométrique et le défilement dans le capteur. Les exemples numériques du tableau prennent un capteur dont la résolution angulaire du pixel vaut 0.1 mrd. Le champ d'observation est alors de 100 mrd pour une matrice 1000 x 1000 pixels.

Tableau 1

| Vitesse de l'aéronef (m/s) | Distance de l'objet (m) | Temps restant pour la manoeuvre (secondes) | Dépointage de l'observation (mrd) | Défilement géométrique (mrd/s) | Défilement capteur (nb pixels / secondes) |
|---|---|---|---|---|---|
| 100 | 2000 | 20 s | 100 | 5 | 50 |
| 100 | 2000 | 20s | 50 | 2.5 | 25 |
| 100 | 1000 | 10 s | 100 | 10 | 100 |
| 100 | 1000 | 10 | 50 | 5 | 50 |
| 200 | 5000 | 25 | 100 | 4 | 40 |

On décrit ci-dessous, en référence à la figure 5A, un exemple spécifique d'une mise en oeuvre du procédé selon l'invention, dans lequel il y a plusieurs motifs défilants dans le champ 4.

Pour les motifs défilants correspondant à M1 à M5, on calcule le défilement moyen à gauche du point fixe 5 de l'image, c'est à dire le défilement moyen $\delta_{134}$ pour les motifs M1, M3 et M4, et le défilement moyen $\delta_{25}$ à droite, c'est à dire le défilement moyen pour les motifs M2 et M5.

On détermine ainsi les deux grandeurs $\delta_{134}$ et $\delta_{25}$ liées au défilement de l'environnement, la grandeur $\delta_{25}$ étant située d'un côté (à droite) du point fixe 5, et une autre grandeur $\delta_{134}$ étant située de l'autre côté (à gauche) du point fixe 5.

De ces deux grandeurs, on peut déduire :

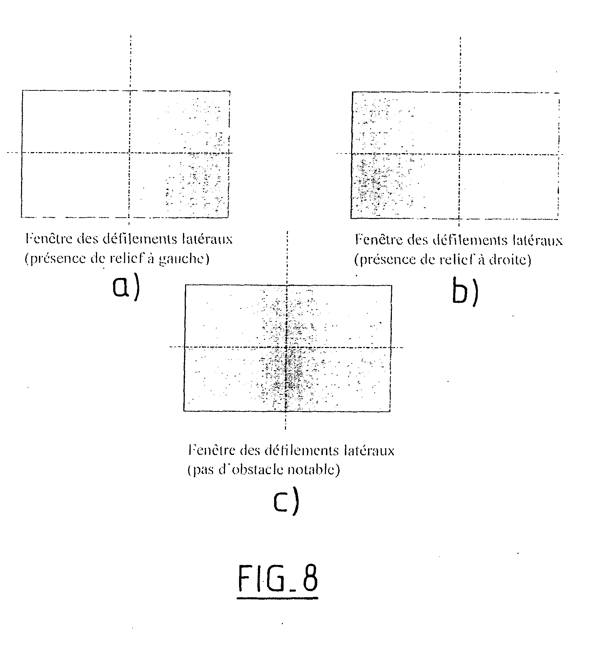

- leur valeur absolue, ou la moyenne des deux grandeurs, donnant une estimation de la distance de la ligne d'obstacle 6 à l'aéronef 1. De cette estimation dépendra l'intensité de la manoeuvre de guidage à appliquer ; et
- leur écart Δ - ou différence - donnant une estimation de l'inclinaison β de la ligne d'obstacle 6. C'est ce que montre également la figure 8.

Dans un premier temps, on en déduit le sens de la manoeuvre à appliquer. Le guidage automatique de l'aéronef est effectué selon un sens tendant à annuler l'écart Δ. Le sens du guidage tend à annuler l'écart, et l'intensité de l'ordre de guidage peut être une commande proportionnelle du type :

$$Imp = k. \, \delta_{moyen}$$

où $\delta_{moyen}$ est la moyenne du défilement à droite et à gauche du point fixe.

En d'autres termes, l'écart entre les deux défilements donne un défilement résultant, et le guidage automatique est effectué dans le sens opposé au défilement résultant observé.

Dans un deuxième temps, on peut aussi estimer un nouveau point visé, comme on le verra plus tard dans la suite de la présente description.

Comme le montre la figure 6, la manoeuvre de guidage automatique calculée peut, dans la plupart des cas, avoir pour objectif de dévier l'aéronef 1 de la ligne obstacle 6, donc d'imprimer à l'aéronef 1, une impulsion latérale Imp tendant à annuler β.

On a donc :

$$Imp = Masse * V * F(\tilde{\beta})$$

Avec F(β) une fonction de β, ce qui montre que β est avantageusement utilisé dans le calcul de l'impulsion à donner à l'aéronef.

Comme on le verra dans la suite de la présente description, F(β) peut être de la forme six(β) ou tan (β).

Une commande proportionnelle de type :

$$Imp = k. \, \delta_{moyen}$$

est aussi envisageable au lieu d'une impulsion pour annuler β.

D'une façon générale,

- pour le guidage latéral selon l'axe X, on asservit le guidage de l'aéronef sur un écart de défilement nul, pour éviter les obstacles, et
- pour le guidage vertical selon l'axe Y, on asservit le guidage de l'aéronef sur un écart non nul.

L'écart non nul est avantageux principalement dans deux situations de vol :

- vol à hauteur constante ; et
- phase d'approche du sol et atterrissage.

Lorsque le vecteur vitesse V de l'aéronef 1 est aligné ou parallèle à l'axe longitudinal de l'aéronef, et pour les défilements selon un axe horizontal, on peut considérer que les observations de défilements sont faites dans le repère de l'aéronef.

Le repère de l'aéronef peut également être utilisé dans certains cas pour l'observation des défilements, par exemple pour compenser l'incidence de l'aéronef par rapport à l'horizontal pendant le vol à hauteur constante ou pour optimiser l'observation des défilements lors de l'approche du sol ou l'atterrissage.

Ainsi, lorsque le seuil non nul devient trop grand, il est préférable de faire pivoter le capteur vers le sol pour observer les défilements.

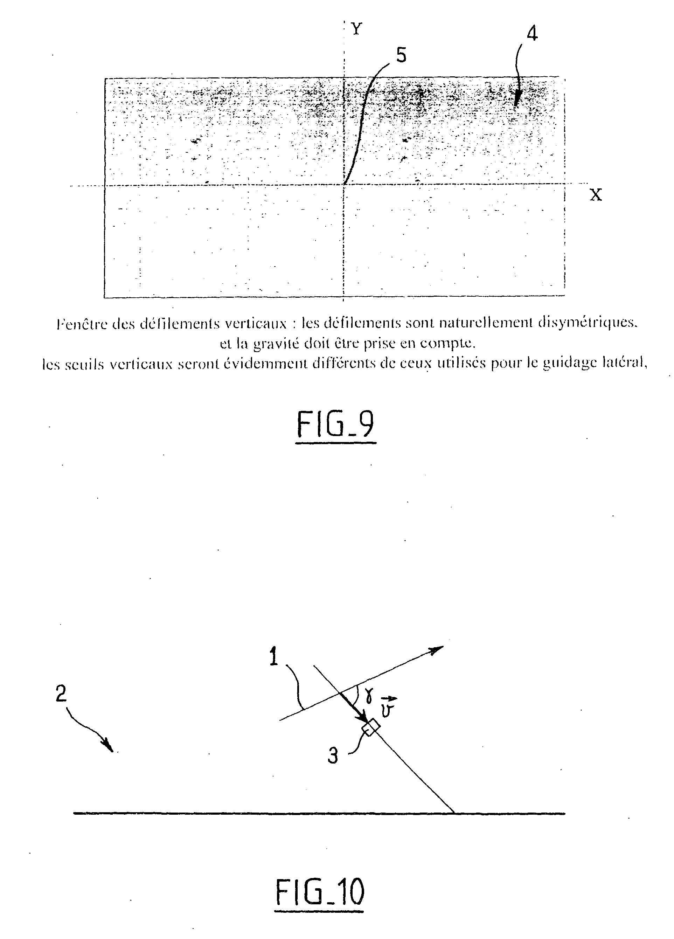

Comme le montre la figure 10, lorsque le vecteur vitesse V de l'aéronef n'est pas aligné ni parallèle à l'axe longitudinal de l'aéronef 1 - typique d'une phase d'approche du sol ou d'un atterrissage - et, en général, pour les défilements selon un axe vertical, les observations de défilements sont faites dans le repère aérodynamique de l'aéronef, c'est à dire le repère aligné, non plus sur l'axe longitudinal de l'aéronef, mais sur le vecteur vitesse V.

Le capteur 3 est donc monté avec un pivotement possible par rapport à l'aéronef, de sorte à être constamment aligné avec le vecteur vitesse V de l'aéronef.

Comme on l'a dit, d'une façon générale, un mode normal de guidage automatique de l'aéronef, selon au moins une direction de tolérance, peut impliquer un asservissement du guidage de l'aéronef autour d'un écart entre les deux grandeurs liées au défilement. L'écart doit être inférieur ou égal à un seuil prédéterminé, le seuil étant non nul.

Le seuil non nul précité prend tout son sens dans la direction verticale Y.

Comme le montre la figure 9, les défilements supérieurs et inférieurs par rapport au point fixe 5 sont dissymétriques. En effet, les défilements supérieurs correspondent au ciel (peu de motifs défilants en général) et les défilements inférieurs correspondent au défilement du sol (de nombreux motifs défilant en continu). Le seuil prédéterminé prend en compte la dissymétrie de défilement et la gravité. A cet effet, on pose :

Seuil = défilement forfaitaire acceptable pour une hauteur de vol Hvol de consigne, d'où

$$Seuil = \frac{Hvol}{Dis\tan ce\_D}$$

La distance D est une valeur forfaitaire, garantissant le temps de la manoeuvre. Par exemple, pour vingt secondes de vol, on a

$$Distance = V(aéronef)*20$$

Soit pour une vitesse de 100 m/s, une distance de 2000 m. L'asservissement sur cette consigne fait que le guidage maintient l'aéronef à Hvol, avec une avance de 2000 m (ou 20 secondes).

La manoeuvre d'évitement de l'obstacle ne sera effectuée que lorsque l'écart entre les défilements sera supérieur au seuil, c'est à dire que l'aéronef s'approche trop du sol par exemple. Ainsi un guidage automatique de l'aéronef, selon la direction de tolérance et tendant à retrouver un écart inférieur ou égal au seuil prédéterminé, est déclenché lorsque que l'écart est supérieur audit seuil.

Bien entendu, si l'on souhaite que l'aéronef reste à proximité d'un obstacle placé latéralement par rapport à l'aéronef, un seuil prédéterminé non nul pour l'écart sera appliqué à la direction horizontale X.

Un mode spécifique de guidage automatique de l'aéronef selon ladite direction de tolérance peut être enclenché pour maintenir un écart égal à un seuil d'approche prédéterminé. Il s'agit alors par exemple d'une phase d'approche du sol et/ou d'atterrissage.

Dans le mode spécifique précité, on détermine alors l'écart et on corrige le guidage de l'aéronef pour le rendre égal au seuil d'approche prédéterminé. Un tel mode de guidage spécifique permet une bonne approche du sol par l'aéronef.

On rappelle que lors d'une phase d'approche, le capteur peut être pivoté vers le sol pour être aligné avec le vecteur vitesse de l'aéronef.

Les ordres de guidage sont à appliquer dans le repère aérodynamique de l'aéronef. On suppose donc que l'estimation de l'incidence et du dérapage est maîtrisée. L'estimation peut être négligeable dans certains cas, ou en tout état de cause compensée au niveau du système de pilotage.

Très préférentiellement, la largeur du champ 4 est fonction des grandeurs.

En effet, l'efficacité du procédé est améliorée si les grandeurs sont déterminées le plus tôt possible, c'est à dire dans un champ 4 le plus étroit possible, tout en s'assurant que ces grandeurs sont significatives.

Or la dynamique peut varier fortement selon le type de relief et la topographie rencontrée par l'aéronef.

- Le traitement du champ ne doit conserver que l'information concernant les grandeurs liées au défilement dues à la progression de l'aéronef 1 dans l'environnement.

L'information précitée peut être typiquement obtenue par les traitements successifs suivants :

- stabilisation de l'image : les mouvements d'attitude « haute fréquence » de l'aéronef sont filtrés pour obtenir une image résultante stable sur le point visé de l'aéronef,
- les grandeurs liées au défilement du à la progression du relief sont obtenues grâce à une hypothèse forte que l'on rappelle : les objets à observés sont immobiles et la vitesse de l'aéronef est connue. La prédiction du défilement attendu peut être faite avec précision si l'on connaît l'ordre de grandeur de la distance. Il suffit donc d'estimer en continu cette distance par un algorithme approprié.

Les développements qui suivent concernent l'optimisation du procédé décrit ci-dessus. L'optimisation s'effectue en adaptant le champ du capteur, pour compenser les disparités d'observation lorsque le relief varie. L'optimisation s'apparente à une commande de la distance focale du capteur pour conserver au mieux un ordre de grandeur mesurable dans le champ du capteur.

La largeur du champ est calculée selon les deux axes : horizontal et vertical. La largeur selon l'axe vertical et la largeur selon l'axe horizontal peuvent être adaptées en taille indépendamment l'une de l'autre.

On pourra appliquer la méthode classique suivante :

- la taille du champ est réduite à sa taille minimale ;
- on détermine les grandeurs ;
- si les grandeurs dans le champ sont trop faibles, on prévoit d'augmenter la fenêtre de calcul, jusqu'à ce que la dynamique des mesures atteigne un seuil prédéfini ;
- inversement, si la dynamique des grandeurs devient trop forte (valeurs trop importantes sur les bords du champ), la taille du champ doit diminuer.

Une fois la largeur du champ ajustée à la bonne dynamique, on peut considérer qu'on a obtenu la distance moyenne de l'obstacle. Il est possible d'appliquer les techniques classiques d'estimation continue, comme par exemple la prédiction de la distance et de la largeur du champ. Ainsi, on dispose en permanence d'une largeur de champ normalisée, c'est à dire optimisée pour la détermination des grandeurs.

L'adaptation de la largeur du champ s'effectue par exemple grâce à un zoom optique dans le capteur 3.

On peut également ajuster la précision angulaire de chaque pixel en fonction des grandeurs mesurées.

En parallèle de l'adaptation de la largeur du champ, de préférence selon l'axe horizontal et selon l'axe vertical, les écarts, de préférence également selon l'axe horizontal et selon l'axe vertical, sont utilisés par la fonction de guidage.

Cette étape permet d'augmenter la robustesse du guidage, même lorsque la topographie du milieu change brusquement, voire lorsque l'on passe d'un environnement du type relief doux ou faible à un environnement urbain.

Selon une variante d'un aéronef selon l'invention, l'aéronef 1 comporte deux capteurs 31 et 32.

On détecte ainsi une grandeur liée au défilement différentiel entre les deux capteurs 31 et 32 sur les mêmes points. Cette variante est surtout avantageuse dans le cas d'un guidage latéral.

Les étapes consistant à déterminer au moins deux grandeurs liées au défilement de l'environnement et à déterminer l'écart sont effectuées dans le champ de chaque capteur.

Le guidage s'effectue alors en fonction du différentiel des écarts des capteurs 31 et 32.

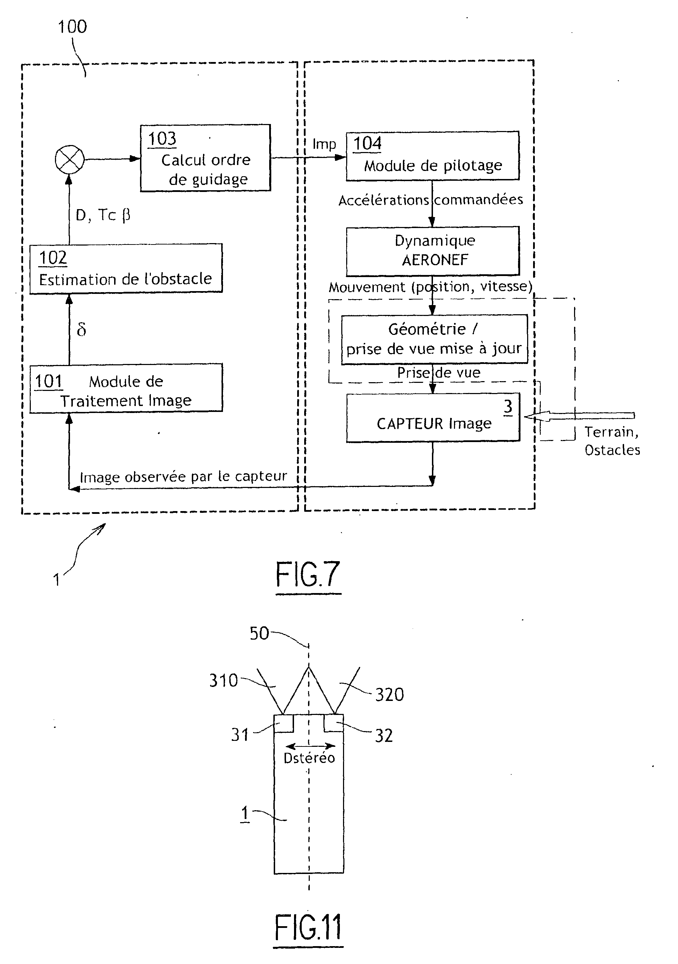

Comme le montre la figure 11, les deux capteurs 31 et 32 sont montés dans le plan perpendiculaire à l'axe longitudinal 50 de l'aéronef, à une distance Dstereo l'un de l'autre.

L'exploitation de la différence des écarts de défilement observés par les deux capteurs apporte encore de la précision à l'estimation des caractéristiques des obstacles. L'intérêt peut être fort, notamment en environnement urbain.

Selon une autre variante, dans le cas des minidrones ou des microdrones, évoluant en environnement urbain, voire en intérieur, la zone de surveillance de défilement entoure complètement le point visé.

Le modèle d'estimation et les traitements d'images associés pour déterminer les grandeurs liées au défilement présentent de fortes différences avec le survol du relief en continu. Notamment, la dynamique du défilement est beaucoup plus importante, avec éventuellement des discontinuités.

En revanche, on peut espérer que les contours surveillés sont plus nets. D'où un meilleur ratio de l'intensité du signal sur le bruit (SNR) pour les grandeurs, avec une continuité par morceaux.

Avantageusement, on prend en compte les zones masquées. A cet effet, il est intéressant de mémoriser des obstacles aperçus très tôt, ayant momentanément disparus, et dont on peut prédire la réapparition sur le chemin de l'aéronef.

Dans les développements qui précèdent, la grandeur liée au défilement est le défilement d'un motif, ou une valeur moyenne d'une pluralité de défilements.

Selon une variante ou en complément, la grandeur liée au défilement est la dérivée temporelle du défilement. La dérivée temporelle est riche d'information. Elle permet de trajectographier au plus tôt les obstacles. En d'autres termes, si l'étape de traitement d'images donne des résultats assez riches, cela peut être une façon d'anticiper les rapprochements d'obstacles.

Il est rappelé qu'en matière de poursuite en deux dimensions, la dérivée temporelle du défilement, associée à une condition initiale en trois dimensions - même imprécise - sur la position ou la vitesse, permet d'estimer et de prédire complètement la trajectoire d'objets en 3D.

Les développements qui suivent décrivent un mode de réalisation possible de moyens de mise en oeuvre d'un procédé selon l'invention.

Comme le montre la figure 7, des moyens 100 de l'aéronef 1 permettent de mettre en oeuvre la fonction de guidage.

La fonction de guidage est la fonction cible à régler par rapport au comportement global de l'aéronef 1 et du capteur 3. Le comportement global comporte le pilotage et la dynamique de l'aéronef 1 notamment.

A partir d'une image issue du capteur 3 et jusqu'à l'élaboration des manoeuvres de guidage à appliquer à l'aéronef 1, la fonction de guidage est par exemple réalisée en quatre étapes successives :

- détermination du défilement horizontal ;
- détermination de l'angle d'arrivée sur l'obstacle et du temps restant avant collision ;
- calcul de l'impulsion horizontal nécessaire pour éviter l'obstacle ;
- calcul du terme d'accélération à appliquer à l'aéronef, et pendant quelle durée.

Le module 101 effectue la détermination des grandeurs. Il est apte à cet effet à effectuer un traitement d'images pour déterminer par exemple le défilement à gauche et à droite du point fixe 5 du champ. Il a comme paramètre d'entrée l'image perçue par le capteur 3 à bord de l'aéronef 1 et comme paramètres de sortie par exemple le défilement à gauche du point fixe 5 et le défilement à droite du point fixe 5.

Lors de la détermination des grandeurs, il faut isoler les déplacements d'objets, dus au rapprochement de l'aéronef. La détermination peut être effectuée sur l'image stabilisée, et en particulier sur l'image dans laquelle les déplacements à hautes fréquences, caractéristiques des vibrations et des variations erratiques d'attitude de l'aéronef, ont été filtrées.

On précise que dans le cas du survol de relief à basse altitude, le modèle de défilement est fortement prédictif.

Le module 102 est apte à estimer l'obstacle, par des considérations purement géométriques, comme le dépointage angulaire de la zone observée dans l'image : $\alpha$. Il a comme paramètres d'entrée

- $\delta g$ - le défilement à gauche du point fixe - ,
- $\delta d$ - le défilement à droite du point fixe - et
- la vitesse V de l'aéronef.

Il a comme paramètre de sortie

- Tc - le temps avant collision et
- $\beta$ - l'angle estimé de la ligne d'obstacle.

Dans un premier temps, les défilements mesurés à droite et à gauche permettent d'estimer les distances Dd et Dg :

$$Dd = V.\sin \alpha/\delta d,$$

$$Dg = V.\sin \alpha/\delta g.$$

Comme le montre la figure 6, l'ordre de guidage est calculé de telle façon que l'aéronef 1 longe l'obstacle. Géométriquement, cela se traduit par le fait que l'obstacle se présente à l'aéronef avec un angle $\beta$ le plus faible possible.

L'étroitesse du champ permet de faire les approximations suivantes :

$$\tan \beta = Bd / h1$$
$$= Bg / h2$$

On a également

$$Bd = Dd * \sin \alpha ;$$

et

$$h1 = Hd * \cos \alpha$$

$$= \left| \frac{Dd - Dg}{2} \right| * \cos \alpha$$

De même,

$$Bg = Dg * \sin \alpha$$

$$h2 = Hg * \cos \alpha$$

Donc :

$$\tan \beta = \frac{2 * Dd}{|Dd - Dg|} * \tan \alpha$$

Qui peut s'écrire aussi :

$$\tan \beta = \frac{Dg + Dd}{|Dg - Dd|} * \tan \alpha$$

Qui peut s'écrire aussi, en fonction des défilements $\delta g$ et $\delta d$ mesurés:

$$\tan \beta = \frac{\delta g + \delta d}{|\delta g - \delta d|} * \tan \alpha \qquad (E)$$

On comprend que la valeur $\sin \beta$ peut facilement être déduite de la valeur $\tan \beta$.

Le module 103 est apte à effectuer le calcul de la manoeuvre d'évitement. Là encore, le fonctionnement du module 103 repose sur des considérations géométriques. Il est indépendant des caractéristiques dynamiques de l'aéronef. Il a comme paramètres d'entrée

- $\beta$,
- V,
- l'inertie de l'aéronef,
- le sens du défilement (à savoir le signe de $\delta g - \delta d$).

Il a comme paramètre de sortie Imp - l'impulsion à appliquer.

Dans la plupart des cas, l'impulsion est ajustée pour annuler $\beta$. L'objectif est qu'à l'issue de la manoeuvre, le point de visée se trouve à l'infini, jusqu'à ce que l'on rencontre une nouvelle ligne d'obstacle.

Une stratégie de guidage typique pourra être la suivante.

Lorsque la différence des défilements à droite et à gauche $|\delta g - \delta d|$ est significative, c'est à dire qu'elle n'est pas entachée d'incertitudes, on applique l'ordre :

$$Imp = Masse * V(aéronef) * F(\beta)$$

Avantageusement, $F(\beta)$ est $\sin \beta$.

On a donc

$$Imp = Masse * V(aéronef) * \sin \beta$$

Cette équation montre que la valeur de β est prise en compte dans le calcul de l'impulsion à donner à l'aéronef. Le calcul de tan β montre que l'ordre de guidage prend en compte directement les défilements mesurés (voir l'équation (E) ci-dessus).

Dans certains cas, F(β) peut être de la forme tan β.

Lorsque la différence des défilements à droite et à gauche |δg - δd| peut être entachée d'incertitudes, par exemple dans le cas où la différence |δg - δd| observée est trop faible, on ne peut rien décider.

On surveille alors la valeur moyenne des défilements dans l'image :

$$|δg + δd| / 2.$$

A remarquer que l'estimation du temps restant avant collision, à savoir:

$$Tc = (Dg + Dd) / (2 V)$$

est directement liée à cette valeur moyenne. Tc vaut en effet approximativement :

$$Tc \sim δmoyen * α$$

Si Tc est faible, alors le danger est éloigné, et l'ordre de guidage peut être nul.

Si Tc est importante, on se trouve dans le cas très particulier, où l'obstacle est dangereusement proche, et il se présente perpendiculairement. Dans ce cas, une stratégie de d'urgence appliquant un ordre dans un sens choisi arbitrairement est la solution.

Bien entendu, une commande proportionnelle du type

$$Imp = k. \, δ_{moyen}$$

où $δ_{moyen}$ est la moyenne du défilement à droite et à gauche du point fixe, est aussi envisageable.

Le sens de la manoeuvre est donné par le signe de δg - δd.

Le module 104 est apte à calculer le terme d'accélération horizontale. Il est à la frontière de la fonction de guidage et du module de pilotage qui est fortement lié aux caractéristiques de l'aéronef (types de gouvernes de pilotage, inertie, masse, domaine de vol,...).

Il a comme paramètre d'entrée Imp.

Il a comme paramètre de sortie

- Acc- l'ordre d'accélération horizontal - et
- Dt - durée d'application de l'ordre.

L'ordre dépend de la fonction de transfert de la boucle de pilotage de l'aéronef.

On respecte en tout état de cause :

$$Imp = Acc * Dt$$

**Revendications**

**1.** Procédé de guidage d'un aéronef (1) dans un environnement (2), l'aéronef (1) comportant au moins un capteur (3) ayant un champ optique (4) d'observation de l'environnement,
l'environnement (2) étant en défilement dans le champ (4) du capteur (3), lors du déplacement de l'aéronef, par rapport à un point fixe (5) au centre du champ (4),

**caractérisé en ce qu'**il comporte une étape consistant à :

- déterminer au moins deux grandeurs ($\delta_1$, $\delta_2$ ; $\frac{d\delta_1}{dt}$, $\frac{d\delta_2}{dt}$) liées au défilement de l'environnement, chaque grandeur étant le défilement lui-même ou une valeur moyenne d'une pluralité de défilements ou une dérivée temporelle du défilement, une grandeur étant située d'un côté du point fixe (5), et une autre grandeur étant située d'un autre côté du point fixe (5) ;
- déterminer un écart ($\Delta$) entre les deux grandeurs ;
- guider automatiquement l'aéronef dans l'environnement un sens du guidage étant fonction dudit écart.

2. Procédé selon la revendication 1, comportant une étape consistant à déterminer deux grandeurs liées au défilement horizontal de l'environnement sur un axe horizontal (X) dans le champ (4) et/ou deux grandeurs liées au défilement vertical de l'environnement sur un axe vertical (Y) dans le champ (4), le sens du guidage automatique selon une direction parallèle à l'axe horizontal (X) et/ou selon une direction parallèle à l'axe vertical (Y) étant fonction de l'écart entre les deux grandeurs sur chaque axe (X, Y).

3. Procédé selon la revendication 2, dans lequel le guidage automatique de l'aéronef selon au moins une direction est effectué selon un sens tendant à annuler l'écart.

4. Procédé selon l'une des revendications 2 ou 3, dans lequel un mode normal de guidage automatique de l'aéronef, selon au moins une direction de tolérance, implique un asservissement autour d'un écart inférieur ou égal à un seuil non nul prédéterminé, un guidage automatique de l'aéronef selon ladite direction de tolérance tendant à retrouver un écart inférieur ou égal audit seuil prédéterminé étant déclenché lorsque que l'écart est supérieur audit seuil.

5. Procédé selon la revendication 4, dans lequel la direction selon laquelle l'écart est impliqué est la direction verticale.

6. Procédé selon l'une des revendications. 4 ou 5, dans lequel un mode spécifique de guidage automatique de l'aéronef selon ladite direction de tolérance est enclenché pour maintenir un écart égal audit seuil prédéterminé.

7. Procédé selon l'une des revendications 1 à 6, dans lequel la largeur du champ (4) est ajustée en fonction des grandeurs.

8. Procédé selon l'une des revendications. 1 à 7, dans lequel la précision angulaire de chaque pixel est ajustée en fonction des grandeurs.

9. Procédé selon l'une des revendications 1 à 8, dans lequel l'aéronef (1) comporte deux capteurs (31, 32), les étapes consistant à déterminer au moins deux grandeurs ($\delta_1$, $\delta_2$ ; $\frac{d\delta_1}{dt}$, $\frac{d\delta_2}{dt}$) liées au défilement de l'environnement et à déterminer l'écart étant effectuées dans le champ de chaque capteur (31, 32), le guidage s'effectuant en fonction du différentiel des écarts des capteurs (31, 32).

10. Procédé selon l'une des revendications 1 à 9, dans lequel l'intensité du guidage est fonction de la valeur absolue ou de la moyenne des grandeurs.

11. Procédé selon l'une des revendications 1 à 9, dans lequel, lorsque l'écart des grandeurs est significatif, l'intensité lmp du guidage est de la forme

$$\text{Imp} = \text{Masse} * \text{V(aéronef)} * F(\beta)$$

où Masse est la masse de l'aéronef, V(aéronef) est la vitesse de l'aéronef, et où $F(\beta)$ est une fonction de $\beta$, où $\beta$ est l'angle entre une ligne d'obstacles à éviter et la direction de déplacement de l'aéronef.

12. Aéronef (1) apte à se déplacer dans un environnement (2), comportant au moins un capteur (3) ayant un champ optique (4) d'observation de l'environnement, l'environnement (2) étant en défilement dans le champ (4) du capteur (3), lors du déplacement de l'aéronef, par rapport à un point fixe (5) au centre du champ (4),
**caractérisé en ce qu'**il comporte des moyens (100) pour :

- déterminer au moins deux grandeurs ($\delta_1$, $\delta_2$ ; $\dfrac{d\,\delta_1}{dt}$, $\dfrac{d\,\delta_2}{dt}$) liées au défilement de l'environnement, chaque grandeur étant le défilement lui-même ou une valeur moyenne d'une pluralité de défilements ou une dérivée temporelle du défilement, une grandeur étant située d'un côté du point fixe (5), et une autre grandeur étant située d'un autre côté du point fixe (5) ;
- déterminer un écart (Δ) entre les deux grandeurs ;
- guider automatiquement l'aéronef dans l'environnement, un sens du guidage étant fonction dudit écart.

13. Aéronef selon la revendication 12, dans lequel le capteur est mobile en rotation selon un axe.

14. Aéronef selon l'une des revendications 12 ou 13, comportant deux capteurs.


**Claims**

1. Process of guiding an aircraft (1) in an environment (2),
the aircraft (1) comprising at least one sensor (3) having an optical field (4) of observation of the environment,
the environment (2) passing through the field (4) of the sensor (3), during movement of the aircraft, with respect to a fixed point (5) at the centre of the field (4),
**characterised in that** it comprises the step consisting of:

- determining at least two quantities ($\delta_1$, $\delta_2$; $\dfrac{d\delta_1}{dt}$, $\dfrac{d\delta_2}{dt}$) linked to the passage of the environment, each quantity being the passage itself or a mean value of a plurality of passages or a time derivative of the passage, one quantity being situated on one side of the fixed point (5), and another quantity being situated on the other side of the fixed point (5);
- determining a difference (Δ) between the two quantities;
- automatically guiding the aircraft in the environment, a direction of the guidance depending on said difference.

2. Process according to claim 1, comprising a step consisting of determining two quantities linked to the horizontal passage of the environment on a horizontal axis (X) in the field (4) and/or two quantities linked to the vertical passage of the environment on a vertical axis (Y) in the field (4), the direction of the automatic guidance in a direction parallel to the horizontal axis (X) and/or in a direction parallel to the vertical axis (Y) depending on the difference between the two quantities on each axis (X, Y).

3. Process according to claim 2, in which the automatic guidance of the aircraft in at least one direction is effected in a direction tending to cancel out the difference.

4. Process according to one of claims 2 or 3, in which a normal mode of automatic guidance of the aircraft, in at least one tolerance direction, involves slaving around a difference less than or equal to a predetermined non-zero threshold, automatic guidance of the aircraft in said tolerance direction tending to find a difference less than or equal to said predetermined threshold being triggered when the difference is greater than said threshold.

5. Process according to claim 4, in which the direction in which the difference is involved is the vertical direction.

6. Process according to one of claims 4 or 5, in which a specific mode of automatic guidance of the aircraft in said tolerance direction is triggered in order to maintain a difference equal to said predetermined threshold.

7. Process according to one of claims 1 to 6, in which the width of the field (4) is adjusted according to the quantities.

8. Process according to one of claims 1 to 7, in which the angular precision of each pixel is adjusted according to the quantities.

9. Process according to one of claims 1 to 8, in which the aircraft (1) comprises two sensors (31, 32), the steps consisting of determining at least two quantities ($\delta 1$, $\delta 2$; $\dfrac{d\delta_1}{dt}, \dfrac{d\delta_2}{dt}$) linked to the passage of the environment and determining the difference being performed in the field of each sensor (31, 32), the guidance taking place according to the differential of the differences between the sensors (31, 32).

**10.** Process according to one of claims 1 to 9, in which the intensity of the guidance depends on the absolute value or the mean of the quantities.

**11.** Process according to one of claims 1 to 9, in which, when the difference between the quantities is significant, the intensity Imp of the guidance is of the form

$$\texttt{Imp = Mass * V(aircraft) * F(}\beta\texttt{)}$$

where mass is the mass of the aircraft, V(aircraft) is the velocity of the aircraft, and where F($\beta$) is a function of $\beta$, where $\beta$ is the angle between a line of obstacles to be avoided and the direction of movement of the aircraft.

**12.** Aircraft (1) able to move in an environment (2) ,
comprising at least one sensor (3) having an optical field (4) of observation of the environment,
the environment (2) passing through the field (4) of the sensor (3), during the movement of the aircraft, with respect to a fixed point (5) at the centre of the field (4),
**characterised in that** it comprises means (100) for:

- determining at least two quantities ($\delta 1$, $\delta 2$; $\dfrac{d\delta_1}{dt}, \dfrac{d\delta_2}{dt}$) linked to the passage of the environment, each quantity being the passage itself or a mean value of a plurality of passages or a time derivative of the movement, a quantity being situated on one side of the fixed point (5), and another quantity being situated on another side of the fixed point (5);
- determining a difference ($\Delta$) between the two quantities;
- automatically guiding the aircraft in the environment, a direction of the guidance being a function of said difference.

**13.** Aircraft according to claim 12, in which the sensor is able to move in rotation on an axis.

**14.** Aircraft according to one of claims 12 or 13, comprising two sensors.

**Patentansprüche**

**1.** Verfahren zum Lenken eines Luftfahrzeugs (1) in einer Umgebung (2), wobei
das Luftfahrzeug (1) mindestens einen Sensor (3) mit einem optischen Beobachtungsfeld (4) zur Beobachtung der Umgebung aufweist,
während der Fortbewegung des Luftfahrzeugs die Umgebung (2) sich in dem Feld (4) des Sensors (3) bezüglich eines stationären Punkts (5) im Zentrum des Felds (4) im Durchlauf befindet,
**dadurch gekennzeichnet, dass** es einen Schritt aufweist, mit

- Ermitteln mindestens zweier mit dem Durchlauf der Umgebung verknüpfter Größen ($\delta_1$, $\delta_2$,; $d\delta_1/dt, d\delta_2/dt$), wobei jede Größe der Durchlauf selbst oder ein durchschnittlicher Wert mehrerer Durchläufe oder eine zeitliche Ableitung des Durchlaufs ist, wobei sich eine Größe auf einer Seite des stationären Punkts (5) befindet und sich eine andere Größe auf einer anderen Seite des stationären Punkts (5) befindet;
- Ermitteln einer Differenz ($\Delta$) zwischen den zwei Größen;
- automatisches Lenken des Luftfahrzeugs in der Umgebung, wobei eine Lenkrichtung eine Funktion der Differenz ist.

**2.** Verfahren nach Anspruch 1, mit einem Schritt, der darin besteht, zwei Größen, die mit dem horizontalen Durchlauf der Umgebung längs einer horizontalen Achse (X) in dem Feld (4) verknüpft sind, und/oder zwei Größen, die mit dem vertikalen Durchlauf der Umgebung längs einer vertikalen Achse (Y) in dem Feld (4) verknüpft sind, zu ermitteln, wobei die Richtung der automatischen Lenkung in einer zur horizontalen Achse parallelen Richtung und/oder in einer zur vertikalen Achse (Y) parallelen Richtung eine Funktion der Differenz zwischen den zwei Größen längs jeder Achse (X, Y) ist.

3. Verfahren nach Anspruch 2, in welchem die automatische Lenkung des Luftfahrzeugs in mindestens einer Richtung in eine Richtung in Hinblick auf eine Aufhebung der Differenz erfolgt.

4. Verfahren nach einem der Ansprüche 2 oder 3, in welchem ein Normalmodus der automatischen Lenkung des Luftfahrzeugs in mindestens einer Abweichungsrichtung eine Regelung um eine Differenz herum, die kleiner oder gleich einem vorgegebenen Schwellenwert von ungleich Null ist, aufweist, wobei eine automatische Lenkung des Luftfahrzeugs in der Abweichungsrichtung in Hinblick darauf, eine Differenz, die kleiner oder gleich dem vorgegebenen Schwellenwert ist, wiederzugewinnen, ausgelöst wird, wenn die Differenz größer als der Schwellenwert ist.

5. Verfahren nach Anspruch 4, in welchem die Richtung, mit welcher die Differenz verknüpft ist, die vertikale Richtung ist.

6. Verfahren nach einem der Ansprüche 4 oder 5, in welchem ein Spezialmodus der automatischen Lenkung des Luftfahrzeugs in der Abweichungsrichtung gestartet wird, um eine Differenz, die gleich dem vorgegebenen Schwellenwert ist, zu halten.

7. Verfahren nach einem der Ansprüche 1 bis 6, in welchem die Breite des Felds (4) in Abhängigkeit von den Größen angepasst wird.

8. Verfahren nach einem der Ansprüche 1 bis 7, in welchem die Winkelpräzision jedes Pixels in Abhängigkeit von den Größen angepasst wird.

9. Verfahren nach einem der Ansprüche 1 bis 8, in welchem das Luftfahrzeug (1) zwei Sensoren (31, 32) aufweist, wobei die Schritte, die darin bestehen, mindestens zwei mit dem Durchlauf der Umgebung verknüpfte Größen ($\delta_1$, $\delta_2$,; $d\delta_1/dt$, $d\delta_2/dt$) zu ermitteln und die Differenz zu ermitteln, im Feld jedes Sensors (31, 32) durchgeführt werden, wobei die Lenkung in Abhängigkeit von der Differenz der Differenzen der Sensoren (31, 32) erfolgt.

10. Verfahren nach einem der Ansprüche 1 bis 9, in welchem die Intensität der Lenkung abhängig ist vom absoluten Wert oder vom Durchschnitt der Größen.

11. Verfahren nach einem der Ansprüche 1 bis 9, in welchem für den Fall, dass die Differenz der Größen signifikant ist, die Intensität Imp der Lenkung von der Form

$$\texttt{Imp = Masse*V(Luftfahrzeug)*F($\beta$)}$$

ist,
wobei Masse die Masse des Luftfahrzeugs, V(Luftfahrzeug) die Geschwindigkeit des Luftfahrzeugs und F($\beta$) eine Funktion von $\beta$ ist, wobei $\beta$ der Winkel zwischen einer Linie von auszuweichenden Hindernissen und der Fortbewegungsrichtung des Luftfahrzeugs ist.

12. Luftfahrzeug (1), das sich in einer Umgebung (2) fortbewegt,
mit mindestens einem Sensor (3) mit einem optischen Beobachtungsfeld (4) zur Beobachtung der Umgebung,
wobei während der Fortbewegung des Luftfahrzeugs die Umgebung (2) sich in dem Feld (4) des Sensors (3) bezüglich eines stationären Punkts (5) im Zentrum des Felds (4) im Durchlauf befindet,
**gekennzeichnet durch** Einrichtungen (100) zum

- Ermitteln mindestens zweier mit dem Durchlauf der Umgebung verknüpfter Größen ($\delta_1$, $\delta_2$,; $d\delta_1/dt$, $d\delta_2/dt$), wobei jede Größe der Durchlauf selbst oder ein durchschnittlicher Wert mehrerer Durchläufe oder eine zeitliche Ableitung des Durchlaufs ist, wobei sich eine Größe auf einer Seite des stationären Punkts (5) befindet und sich eine andere Größe auf einer anderen Seite des stationären Punkts (5) befindet;
- Ermitteln einer Differenz ($\Delta$) zwischen den zwei Größen;
- automatisches Lenken des Luftfahrzeugs in der Umgebung, wobei eine Lenkrichtung eine Funktion der Differenz ist.

13. Luftfahrzeug nach Anspruch 12, in welchem sich der Sensor um eine Achse drehen kann.

14. Luftfahrzeug nach einem der Ansprüche 12 oder 13, mit zwei Sensoren.

V

1    100    3    2

## FIG.1

5    Y

2    X    4

## FIG.2

M6    43    Y    M7

42

Axe de visée
Axe de progression

41    X

M8    44

## FIG.5B

En M3, le défilement vaut : $\delta_3$

$\delta_3 = V.\sin \alpha_3 /D_3$

En M1, le défilement vaut :

$\delta_1 = V.\sin \alpha_1 /D_1$

En M2, le défilement vaut :

$\delta_2 = V.\sin \alpha_2 /D_2$

## FIG.3

6

Ligne d'obstacles

$\delta_2 = V.\sin \alpha /D_2$

En M1, le défilement vaut :

$\delta_1 = V.\sin \alpha /D_1$

## FIG.4

## FIG.5A

## FIG.6

100

```
        ┌──────────────────────────────┐ ┃ ┌──────────────────────────────┐
        ┊                              ┊ ┃ ┊                              ┊
        ┊      ┌─────────────┐         ┊Imp┊ ┌──────────────────────┐     ┊
        ┊      │ 103         │         ┊ ┃ ┊ │ 104                  │     ┊
  ⊗──────────→ │ Calcul ordre│ ───────────→│ Module de pilotage   │     ┊
        ┊      │ de guidage  │         ┊ ┃ ┊ └──────────────────────┘     ┊
        ┊      └─────────────┘         ┊ ┃ ┊  Accélérations commandées    ┊
        ┊                              ┊ ┃ ┊            ↓                 ┊
  D, Tc β                             ┊ ┃ ┊ ┌──────────────────────┐     ┊
        ┊ ┌──────────────────────┐    ┊ ┃ ┊ │   Dynamique          │     ┊
        ┊ │ 102                  │    ┊ ┃ ┊ │   AERONEF            │     ┊
        ┊ │ Estimation de l'obstacle │ ┃ ┊ └──────────────────────┘     ┊
        ┊ └──────────────────────┘    ┊ ┃ ┊ Mouvement (position, vitesse)┊
        ┊          δ                   ┊ ┃ ┊ ┌──────────────────────┐     ┊
        ┊                              ┊ ┃ ┊ │  Géométrie /         │     ┊
        ┊ ┌──────────────────────┐    ┊ ┃ ┊ │ prise de vue mise à jour │ ┊
        ┊ │ 101    Module de     │    ┊ ┃ ┊ └──────────────────────┘     ┊
        ┊ │ Traitement Image     │    ┊ ┃ ┊   Prise de vue               ┊
        ┊ └──────────────────────┘    ┊ ┃ ┊ ┌──────────────────────┐     ┊
        ┊                              ┊ ┃ ┊ │ CAPTEUR Image      3 │ ⇐═══ ┊
        ┊                              ┊ ┃ ┊ └──────────────────────┘     ┊
        ┊  Image observée par le capteur ┃            ↓                   ┊
        └──────────────────────────────┘ ┃ └──────────────────────────────┘
```

D, Tc β

δ

Accélérations commandées

Mouvement (position, vitesse)

Prise de vue

Terrain,
Ostacles

Image observée par le capteur

1

## FIG.7

50

310 — — 320

31 — — 32

Dstéréo

1

## FIG.11

Fenêtre des défilements latéraux
(présence de relief à gauche)

a)

Fenêtre des défilements latéraux
(présence de relief à droite)

b)

Fenêtre des défilements latéraux
(pas d'obstacle notable)

c)

FIG. 8

Fenêtre des défilements verticaux : les défilements sont naturellement disymétriques,
et la gravité doit être prise en compte.
les seuils verticaux seront évidemment différents de ceux utilisés pour le guidage latéral,

### FIG_9

### FIG_10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 1605386 A